# EUROPÄISCHE PATENTANMELDUNG

(11) **EP 0 613 914 A1**
(43) Veröffentlichungstag der Anmeldung: **07.09.1994**
(21) Anmeldenummer: 94102881.3
(22) Anmeldetag: 25.02.1994
(51) Int. Cl.: C08G 18/28, C08G 18/08, C08G 18/48, C08J 3/03

(54) **Ungesättigte Polyurethane und deren Verwendung als Dispergiermittel für Alkydharze**

(30) Priorität: 05.03.1993 DE 4306946
(71) Anmelder: HOECHST AKTIENGESELLSCHAFT, D-65926 Frankfurt am Main (DE)
(72) Erfinder: Angelmayer, Karl-Hans, D-65343 Eltville (DE); Walz, Gerd, Dr., D-65207 Wiesbaden (DE); Zöller, Joachim, Dr., D-55128 Mainz (DE)

(57) **Zusammenfassung**

Ungesättigte Polyurethane mit einem Anteil von 20 bis 80 Gew.-% Polyethylenglykol-Einheiten, herstellbar durch Umsetzung von
a) mindestens einem organischen Polyisocyanat,
b) einem ungesättigten Fettalkohol oder dessen Polyalkylenglykolether, einem ungesättigten Fettamin oder einem Umsetzungsprodukt aus einer ungesättigten Fettsäure und einem Monoepoxid,
c) einer Verbindung, die mindestens eine ionische Gruppe neben zwei mit Isocyanatgruppen reaktive Gruppen enthält,
d) einem Polyalkylenglykol mit einer Molmasse von 750 bis 10000 und gegebenenfalls
e) einer Verbindung, die drei bis sechs Hydroxyl- oder Aminogruppen enthält,
   wobei das Verhältnis der Isocyanatgruppen in a) zu den Hydroxyl- und Aminogruppen in den übrigen Komponenten 0,7 : 1 bis 1,2 : 1 beträgt.

Diese ungesättigten Polyurethane dienen als Dispergiermittel für Alkydharze.

## Beschreibung

Die vorliegende Erfindung betrifft ein Verfahren zur Herstellung von wäßrigen Dispersionen von Alkydharzen unter Verwendung von speziell für diesen Zweck hergestellten Dispergiermitteln.

Wasserverdünnbare Lackbindemittel haben in den letzten Jahren ständig an Bedeutung gewonnen, jedoch ist die Palette der wasserverdünnbaren BindemittelSysteme derzeit noch unvollständig, so daß ein Ersatz aller konventionellen Anstrichmittel heute noch nicht möglich ist. Vor allem die lufttrocknenden Alkydharze,die allgemein in Form von Lösungen in aliphatischen oder aromatischen Kohlenwasserstoffen zur Anwendung kommen, können derzeit noch nicht vollwertig ersetzt werden. Filme aus wäßrigen Dispersionen von Polymerisaten (z.B. auf Basis von Polyvinylacetat, Polyolefinen oder Polyacrylaten) erreichen weder im optischen Eindruck (Verlauf, Glanz) noch in ihrer Schutzwirkung (Wasserfestigkeit, Witterungsbeständigkeit) annähernd den Qualitätsstandard der herkömmlichen Alkydharze. Auch wasserlösliche Alkydharze für lufttrocknende Lacke haben sich bisher nicht durchsetzen können. Das liegt z T. daran, daß im Interesse der Wasserlöslichkeit das mittlere Molekulargewicht der Harze gesenkt werden muß. Daraus ergibt sich zwangsläufig eine Verzögerung der Trocknung. Außerdem benötigen diese Harze trotz des niederen Molekulargewichtes relativ große Mengen von z.T. toxischen Hilfslösemitteln (z. B. Glykoläther) und organischer Amine.

Demgegenüber sollten wäßrige Dispersionen von Alkydharzen eine ideale Lösung des Problems ermöglichen, da hier auf organische Lösemittel im allgemeinen vollkommen verzichtet werden kann, und die Trocknungseigenschaften würden denen der konventionell gelösten Harze entsprechen, da eine Begrenzung des Molekulargewichtes wie bei den wasserlöslichen Harzen nicht erforderlich ist. Trotzdem haben auch solche Alkydharzdispersionen bisher keine große Bedeutung erlangt, da es bisher nicht gelungen ist, das Problem der Stabilisierung der Dispersionen ohne Beeinträchtigung der anderen Eigenschaften optimal zu lösen.

Alkydharze sind überwiegend hydrophobe Substanzen, die von sich aus keine stabilen Dispersionen in Wasser bilden. Deshalb müssen Emulgatoren zugesetzt werden. Emulgatoren sind allgemein Substanzen mit amphipatischem Molekülaufbau, d.h. sie bestehen aus einem hydrophoben und einem hydrophilen Molekülteil. Infolge dieses Aufbaus reichern sich die Emulgatormoleküle in der Grenzschicht Wasser/Harz an, setzen die Grenzflächenspannung herab und ermöglichen damit die Bildung feinster Harztröpfchen in der wäßrigen Phase.

Die bisher günstigsten Resultate hat man mit nichtionischen Emulgatoren erzielt, die durch Kondensation von Ethylenoxid an Octyl- oder Nonylphenol entstehen, d.h. bei denen der hydrophobe Teil aus dem Alkylphenolrest und der hydrophile Teil aus der Polyethylenglykolkette besteht. Solche Systeme werden in den US-Patentschriften 3 223 658, 3 269 967, 3 440 193 bzw. der DDR-Patentschrift 88 833 und der DE 27 54 091 beschrieben. Mit derartigen Emulgatoren bekommt man bei Zusatzmengen von 5-10% Dispersionen mit brauchbarer Stabilität. Der Nachteil besteht darin, daß diese Emulgatoren unverändert im Film verbleiben und damit eine wesentliche Verringerung der Wasserfestigkeit bewirken. Die Anwendungsmöglichkeit derartiger Dispersionen ist daher sehr beschränkt.

Ein anderer Weg zur Herstellung von Alkydharzdispersionen wird in vielen Veröffentlichungen beschrieben, z.B. in den US-Patentschriften 2 634 245, 2 853 459, 3 133 032, 3 223 659, 3 379 548, 3 437 615, 3 437 618, 3 442 835, 3 457 206, 3 639 315 bzw. der deutschen Offenlegungsschrift 14 95 031, DE 25 54 330 oder den britischen Patentschriften 1 038 696, 1 044 821, 2 456 277.

Gemäß diesen Veröffentlichungen werden Polyethylenglykolketten durch Ver- oder Umesterung direkt in das Alkydharz eingebaut. Als Vorteil gegenüber dem Verfahren mit "Fremdemulgatoren" wird eine Verbesserung der Wasserfestigkeit der Filme angegeben, die auf die chemische Bindung der hydrophilen Gruppen an die Harzmoleküle zurückgeführt wird. Tatsächlich findet man vor allem auf Substraten, die kein Wasser aufnehmen, wie Metall oder Glas, eher schlechtere Resultate. In den deutschen Patentschriften DE 27 54 141, 27 54 092 und 24 40 946 werden Alkydharzdispersionen beschrieben, die mit Hilfe von Emulgatoren in der wäßrigen Phase stabilisiert werden und die Polyethylenglykole, Fettsäuren und/oder Allylether enthalten. In der europäischen Patentschrift EP 0 501 247 werden Polyurethane beschrieben, die als Emulgatoren eingesetzt werden, und die eine ungesättigte Etheralkoholkomponente enthalten. Diese Emulgatoren können durch ihre Doppelbindungen während der oxidativen Trocknung in den Film eingebaut werden. Dadurch können Filme erhalten werden, die eine verbesserte Wasserfestigkeit aufweisen.

Ein Hauptproblem dieser Alkydharzemulsionen ist, neben der langsamen Trocknung die schlechte Pigmentierbarkeit, da nach den oben beschriebenen Verfahren keine glänzenden hochpigmentierten Filme erhalten werden können.

Aufgabe der vorliegenden Erfindung war es daher, solche wäßrigen Lacksysteme zu finden, die sich gegenüber dem bekannten Stand der Technik durch verbesserte Eigenschaften, insbesondere hinsichtlich der Pigmentierbarkeit, Trocknung, Wasserfestigkeit und der Lagerstabilität, auszeichnen.

Die Erfindung betrifft ungesättigte Polyurethane mit einem Anteil von 20 bis 80 Gew.-% Polyethylenglykol-Einheiten, herstellbar durch Umsetzung von
a) mindestens einem organischen Polyisocyanat,
b) einem ungesättigten Fettalkohol oder dessen Polyalkylenglykolether, einem ungesättigten Fettamin oder einem Umsetzungsprodukt aus einer ungesättigten Fettsäure und einem Monoepoxid,
c) einer Verbindung, die mindestens eine ionische Gruppe oder in eine ionische Struktur überführbare Gruppe, neben zwei mit Isocyanatgruppen reaktive Gruppen enthält,
d) einem Polyalkylenglykol mit einer Molmasse von 750 bis 10000 und gegebenenfalls
e) einer Verbindung, die drei bis sechs Hydroxyl- oder Aminogruppen enthält,
   wobei das Verhältnis der Isocyanatgruppen in a) zu den Hydroxyl- und Aminogruppen in den übrigen Komponenten 0,7 : 1 bis 1,2 : 1 beträgt.

Als Alkydharze werden handelsübliche Typen eingesetzt und zwar im lösemittelfreien Zustand. Zur Erhöhung der Lagerstabilität kann das Alkydharz so modifiziert werden, daß es möglichst geringe Säurezahlen aufweist. Diese Modifizierung kann einerseits während der Herstellung des Alkydharzes durch Veresterungen mit weiteren Alkoholen erfolgen, andererseits können die Säuregruppen auch nachträglich mit Hilfe eines Epoxids verestert werden. Als Epoxidverbindungen kommen alle Monoepoxide in Frage, die beispielsweise in dem Handbuch "Epoxidverbindungen und Epoxidharze" von A.M. Paquin, Springer Verlag, Berlin 1958, Kapitel IV, und in Lee Neville "Handbook of Epoxy Resins",1967, Chapter 2, beschrieben sind. Besonders geeignet sind epoxidierte Fettsäuren sowie Cardura® E10 (Shell AG) (Versaticsäureglycidylester).

Bei den erfindungsgemäßen Polyurethanen handelt es sich um Umsetzungsprodukte der obengenannten Ausgangskomponenten a) bis e), wobei vorzugsweise pro Mol der Komponente a) 0,1 bis 0,8 Mol der Komponente b), 0,1 bis 0,8 Mol der Komponente c), 0,1 bis 0,8 Mol der Komponente d) und 0 bis 0,2 Mol der Komponente e) zum Einsatz gelangen.

Die Komponente a) besteht aus mindestens einem organischen Polyisocyanat. Geeignete Polyisocyanate sind beliebige, aus der Polyurethanchemie an sich bekannte organische Polyisocyanate mit aliphatisch, cycloaliphatisch und/oder aromatisch gebundenen Isocyanatgruppen, die vorzugsweise ein Molekulargewicht von 168 bis 1.000, vorzugsweise 168 bis 300 aufweisen. Geeignet sind beispielsweise 1,6-Diisocyanatohexan (HDI), 1-Isocyanato-3,3,5-trimethyl-5-isocyanatomethyl-cyclohexan (IPDI), Tetramethylxylylendiisocyanat (TMXDI), 4,4'-Diisocyanatodicyclohexylmethan, 4,4'-Diisocyanatodiphenylmethan, dessen technischen Gemische mit 2,4'-Diisocyanatodiphenylmethan und gegebenenfalls den höheren Homologen dieser Diisocyanate, 2,4-Diisocyanatotoluol und dessen technische Gemische mit 2,6-Diisocyanatotoluol. Diese Diisocyanate sind als Komponente a) bevorzugt, jedoch sind auch höherfunktionelle Polyisocyanate wie beispielsweise Biuret-, Isocyanurat- oder Urethan-modifizierte Polyisocyanate auf Basis der genannten einfachen Diisocyanate grundsätzlich geeignet. Diese Derivate weisen im allgemeinen ein Molekulargewicht bis zu 1.000 auf. Die Herstellung derartiger Derivate ist beispielsweise in US-PS 3 124 605, US-PS 3 183 112, US-PS 3 919 218 oder US-PS 4 324 879 beschrieben.

Die Verbindungen der Komponente b) enthalten 5 bis 60, vorzugsweise 12 bis 40 Kohlenstoffatome, mindestens eine Hydroxyl- oder Aminogruppe und mindestens eine C = C- Doppelbindung. Beispiele für diese Alkohole sind einfach oder mehrfach ungesättigte Fettalkohole, wie z.B. Oleylalkohol, Linolalkohol oder Linolenalkohol. Es können auch oxethylierte Fettalkohole eingesetzt werden, die vorzugsweise 1 bis 20, insbesondere 1 bis 10 Ethylenoxideinheiten enthalten, wie zum Beispiel Genapol® O-020 (Hoechst AG). Weiterhin können auch die analogen ungesättigten Fettamine wie z.B. Genamin® eingesetzt werden. Bevorzugt als Komponente b) sind Ester, die durch eine Umsetzung aus einer einfach oder mehrfach ungesättigten Fettsäure und einem Mono-Epoxid erhalten werden, wie zum Beispiel die Umsetzungsprodukte von Leinölfettsäure, Sojaölfettsäure usw. mit einem Mono-Epoxid wie Cardura® E10 oder anderen Mono-Epoxiden. Die Fettalkohole, Fettsäuren bzw. Fettamine haben vorzugsweise 8 bis 20, insbesondere 12 bis 18 C-Atome.

Als Komponente c), die mindestens eine ionische oder in ionische Gruppe überführbare Gruppe enthält, werden Bishydroxyalkancarbonsäuren wie z.B. Dimethylolpropionsäure bevorzugt, es können aber auch sulfonatgruppenhaltige Verbindungen eingesetzt werden, wie z. B. Sulfoisophthalsäure, Sulfoisophthalsäure(poly)glykolester, Taurin oder 4-Aminobenzolsulfonsäure, wobei auch Mischungen zweier oder mehrerer dieser Verbindungen möglich sind.

Bei der Komponente d) handelt es sich um lineare Polyetherglykole eines als Zahlenmittel bestimmten Molekulargewichts von 750 bis 10.000, vorzugsweise 1.000 bis 6.000, deren Alkylenoxideinheiten zumindest zu 80 Mol-%, vorzugsweise zu 100 Mol-%, Ethylenoxideinheiten sind. Der Begriff "Polyethylenglykole" soll somit nicht nur echte Polyethylenglykole umfassen, deren Alkylenoxideinheiten ausschließlich Ethylenoxideinheiten sind, sondern auch Polyalkylenglykole, deren Alkylenoxideinheiten überwiegend, d.h. zumindest zu 80 Mol-% Ethylenoxideinheiten sind. Derartige "gemischte" Polyalkylenglykole entstehen beispielsweise durch Verwendung von Gemischen verschiedener Alkylenoxide, beispielsweise von Ethylenoxid und Propylenoxid im Molverhältnis ∼ 8:2, bei der Herstellung der Polyetherglykole durch Alkoxylierung geeigneter zweiwertiger Startermoleküle wie beispielsweise Wasser, Ethylenglykol oder Propylenglykol.

Als Komponente e) die 3 bis 6 Hydroxyl- und/oder Aminogruppen enthält, werden beispielsweise Trimethylolpropan, Trimethylolethan, Glycerin, Ditrimethylolpropan, Pentaerythrit und Dipentaerythrit, oder Diethanolamin eingesetzt, es können jedoch auch polyfunktionelle Amine wie z.B. Triethylentetramin eingesetzt werden.

Die Herstellung der erfindungsgemäßen, als Emulgatoren zu verwendenden, hydrophilen Polyurethane durch Umsetzung der genannten Ausgangskomponenten kann in Substanz oder in gegenüber Isocyanatgruppen inerten Lösungsmitteln wie beispielsweise Aceton, Methylethylketon, Ethylacetat, Butylacetat, Toluol oder Gemische derartiger Lösungsmittel erfolgen, wobei vorzugsweise Reaktionstemperaturen von 20 bis 200 ⁰C, insbesondere von 50 bis 150 ⁰C, eingehalten werden. Dabei können die Komponenten b) bis d) gleichzeitig oder schrittweise mit der Komponente a) zur Reaktion gebracht werden.

In der Praxis kann man beispielsweise so vorgehen, daß die Komponenten b) bis d) vorgelegt und innerhalb der obengenannten Temperaturbereiche mit dem Isocyanat a) umgesetzt werden, bis der NCO-Gehalt auf unter 0,1 Gew.-% abgefallen ist.

Grundsätzlich werden hierbei die Mengenverhältnisse der Ausgangskomponenten so gewählt, daß ein NCO/OH-Äquivalentverhältnis von 0,7:1 bis 1,2:1 gewährleistet ist.

Die Urethanbildungsreaktionen können in an sich bekannter Weise z.B. mit Zinnoctoat, Dibutylzinndilaurat oder tertiären Aminen katalysiert werden. Ebenso kann das Polyurethan durch Zugabe geeigneter Inhibitoren und Antioxydantien von je 0,001 bis 0,3 Gew.-%, bezogen auf Gesamtmischung, vor vorzeitiger und unerwünschter Polymerisation geschützt werden.

Die auf diese Weise erhaltenen hydrophilen, ungesättigte Gruppen aufweisenden Polyurethane weisen ein als Zahlenmittel bestimmtes, nach der Methode der Gelpermeationschromatographie unter Verwendung von Polystyrol als Standard ermittelbares Molekulargewicht Mn von 1.000 bis 20.000, vorzugsweise 2.000 bis 15.000, einen Gehalt an olefinischen Doppelbindungen (berechnet als -C=C-, Molekulargewicht = 24) von mindestens 0,3 Gew.-%, vorzugsweise 1,0 bis 6,0 Gew.-% und einen Gehalt an über Polyethylenglykol eingebauten Ethylenoxideinheiten -CH₂-CH₂-O- von 20 bis 90 Gew.-%, vorzugsweise 30 bis 85 Gew.-%, auf.

Die hydrophilen Polyurethane stellen wertvolle Dispergiermittel für an sich bekannte, hydrophobe, in Wasser nicht dispergierbare Alkydharze dar. Diese Kunstharze weisen im allgemeinen ein nach der Methode der Gelpermeationschromatographie unter Verwendung von Polystyrol als Standard ermittelbares Molekulargewicht Mn von 500 bis 10.000, vorzugsweise 500 bis 5.000 auf.

Zur Herstellung solcher Alkydharzdispersionen werden zunächst diese Alkydharze mit den oben beschriebenen Polyurethanen gemischt, gegebenenfalls in Gegenwart eines der oben beschriebenen inerten Lösemittel. In diesen Gemischen liegen im allgemeinen 50 bis 95, vorzugsweise 70 bis 93 Gew.-Teile der hydrophoben Alkydharze in Abmischung mit 5 bis 50, vorzugsweise 7 bis 30 Gew.-Teilen der hydrophilen Polyurethane vor. Es ist jedoch wichtig, Art und Mengenverhältnisse der Einzelkomponenten so zu wählen, daß der Gesamtgehalt dieser Gemische an von der Komponente d) herrührenden Ethylenoxideinheiten maximal 20, vorzugsweise maximal 17 Gew.-%, beträgt. Zur Herstellung der wäßrigen Alkydharzdispersionen werden die Gemische in Wasser dispergiert, was durch einfaches Einrühren von Wasser in die vorgelegte Mischung der Kunstharze mittels üblicher Dissolver, oder auch durch Eingießen der Mischung in Wasser unter heftigem Rühren erfolgen kann. Gegebenfalls kann zunächst ein Teil des Wassers zu der oben beschriebenen Mischung gegeben werden und dann diese Mischung unter Rühren in die Restmenge Wasser gegossen werden. Das Harz kann auch invers dispergiert werden. Man erhält auf diese Weise stabile Öl-in-Wasser-Emulsionen.

Diese wäßrigen Dispersionen sind wertvolle wäßrige Bindemittel für Überzugsmittel. Sie können als solche oder in Kombination mit den aus der Lacktechnologie bekannten Hilfs- und Zusatzmittel, wie z.B. Füllstoffen, Pigmenten, Lösungsmitteln, Verlaufshilfsmitteln und dgl. zur Herstellung von Beschichtungen auf beliebigen Substraten verwendet werden.

Geeignete Substrate sind Papier, Kartonage, Leder, Holz, Kunststoffe, Vlies, Folien, Textilien, keramische Materialien, mineralische Materialien, Glas, Metall, beschichtetes Metall, Kunstleder, fotografische Materialien wie z.B. mit fotografischer Schicht versehenes Papier.

Der Auftrag dieser Beschichtungsmittel kann auf bekannte Weise durch Spritzen, Rakeln, Walzen, Streichen, Tauchen oder Gießen erfolgen. Nach Verdunsten des Wassers sowie gegebenenfalls mitverwendeten inerten Lösungsmitteln kann die Vernetzung der Überzüge durch Härtung mit Metallsalzen von Sikkativsäuren und (Hydro)-Peroxiden oder anderen Sikkativen bei Temperaturen zwischen Raumtemperatur und 250 °C erfolgen.

### BEISPIELE

### Beispiel E1

55 g Leinölfettsäure und 51 g Cardura® E10 werden bei 120 °C zur Reaktion gebracht (Katalysator: Chromoctoat) bis eine Säurezahl von < 1 erreicht ist (Rohstoff III).

54 g Dimethylolpropionsäure werden bei ca. 80 °C in 400 g Polyethylenglykol 2000 gelöst. Zu der Lösung gibt man 157 g Solvesso 100 und den Rohstoff III. Nach Erwärmen auf 80 °C wird dann 171 g Tetramethylxylylendiisocyanat so zugetropft, daß eine Temperatur von 85 °C nicht überschritten wird (ca. 30 min). Hat man alles TMXDI zugetropft, so läßt man eine Stunde bei der Temperatur nachrühren und steigert dann die Reaktionstemperatur auf 95 °C. Man hält die Temperatur solange bis der Isocyanatgehalt auf < 0,1 % gefallen ist. Man erhält ein gelbliches zähes Harz.

### Beispiel E2

54,7 g Leinölfettsäure und 50,8 g Cardura E10 werden bei 120 °C zur Reaktion gebracht (Katalysator: Chromoctoat) bis eine Säurezahl von < 1 erreicht ist (Rohstoff III).

40,2 g Dimethylolpropionsäure werden bei ca. 80 °C in 400 g Polyethylenglykol 2000 gelöst. Zu der Lösung gibt man 157 g Solvesso 100 und den Rohstoff III. Nach Erwärmen auf 70 °C wird dann 105,6 g Toluylendiisocyanat so zugetropft, daß eine Temperatur von 75 °C nicht überschritten wird (ca. 30 min). Hat man alles TDI zugetropft, so hält man die Temperatur solange bis der Isocyanatgehalt auf < 0,1 % gefallen ist. Man erhält ein gelbliches zähes Harz.

### Beispiel E3

158 g Leinölfettsäure wird mit 25,7 g Pentaerythrit mit Dibutylzinnoxid als Katalysator bei Temperaturen bis zu 260 °C verestert bis eine Säurezahl < 5 erreicht ist. Nach dem Abkühlen wird 400 g Polyethylenglykol 2000, 40,2 g Dimethylolpropionsäure und 185 g Solvesso 100 zugegeben und die Mischung auf 70 °C erwärmt. Dann wird 104,4g Toluylendiisocyanat so zugetropft, daß die Temperatur nicht über 75 °C steigt. Nach vollendeter Zugabe wird die Reaktionsmischung so lange auf der Temperatur gehalten bis der NCO-Gehalt auf < 0,1 % gefallen ist. Man erhält eine bräunliches zähes Harz.

### Beispiel E4

35 g Genapol O-020 (ungesättigter Fettalkoholdiethylenglykolether) wird mit 400 g Polyethylenglykol 2000 und 20,1 g Dimethylolpropionsäure auf 70 °C erwärmt und 15 min gerührt. Dann wird 160 g Solvesso zugegeben und 52,2 g Toluylendiisocyanat so zugetropft, daß die Temperatur nicht über 75 °C steigt. Man hält die Reaktionsmischung so lange auf 70 °C bis ein NCO-Gehalt < 0,1 erreicht ist. Man erhält ein zähes Harz.

### Beispiel E5

54,7 g Leinölfettsäure und 50,8 g Cardura E10 werden bei 120 °C zur Reaktion gebracht (Katalysator: Chromoctoat) bis eine Säurezahl von < 1 erreicht ist (Rohstoff III). 100g Polyethylenglykol 500 werden mit 29,6 g Sulfoisophthalsäuredimethylester mit Hilfe von Propyltitanat/Zinkacetat als Katalysator bei Temperaturen bis 240 °C umgesetzt bis eine OH-Zahl < 95 erreicht ist. Dann werden 400 g Polyethylenglykol 2000, 174 g Solvesso 100 und Rohstoff III zugegeben. Nach Erwärmen auf 70 °C wird dann 69,7 g Toluylendiisocyanat so zugetropft, daß eine Temperatur von 75 °C nicht überschritten wird (ca. 30 min). Hat man alles TDI zugetropft, so hält man die Temperatur solange bis der Isocyanatgehalt auf < 0,1 % gefallen ist. Man erhält ein gelbliches zähes Harz.

### Beispiel D1

Zu 200 g eines handelsüblichen Alkydharzes (AR 680 100%) werden 55 g des Emulgators E1 zugegeben und bei 70 °C ca. 30 min gerührt bis die Mischung homogen ist. Nach Zugabe von 3 ml Ammoniakwasser (25%) wird 345 g auf 70 °C erwärmtes E-Wasser sehr langsam unter heftigem Rühren zugetropft (ca. 3 Stunden). Man erhält eine milchige strukturviskose Dispersion.

### Beispiel D2

Zu 200 g eines handelsüblichen Alkydharzes (SAS 560 100%), das mit Cardura E10 auf Säurezahl < 1 gebracht wurde, werden 55 g des Emulgators E2 zugegeben und bei 70 °C ca. 30 min gerührt bis die Mischung homogen ist. Nach Zugabe von 3 ml Ammoniakwasser (25%) wird 345 g auf 70 °C erwärmtes E-Wasser sehr langsam unter heftigem Rühren zugetropft (ca. 3 Stunden). Man erhält eine milchige strukturviskose Dispersion.

Alle weiterhin aufgeführten Emulgatoren werden nach den oben beschriebenen Beispielen zu Dispersionen verarbeitet.
Die beschriebenen Emulsionen sind sehr lagerstabil und sehr gut pigmentierbar.

## Patentansprüche

1. Ungesättigte Polyurethane mit einem Anteil von 20 bis 80 Gew.-% Polyethylenglykol-Einheiten, herstellbar durch Umsetzung von
a) mindestens einem organischen Polyisocyanat,
b) einem ungesättigten Fettalkohol oder dessen Polyalkylenglykolether, einem ungesättigten Fettamin oder einem Umsetzungsprodukt aus einer ungesättigten Fettsäure und einem Monoepoxid,
c) einer Verbindung, die mindestens eine ionische Gruppe oder ein in eine ionische Gruppe überführbares Strukturelement neben zwei mit Isocyanatgruppen reaktive Gruppen enthält,
d) einem Polyalkylenglykol mit einer Molmasse von 750 bis 10000 und gegebenenfalls
e) einer Verbindung, die drei bis sechs Hydroxyl- oder Aminogruppen enthält,
wobei das Verhältnis der Isocyanatgruppen in a) zu den Hydroxyl- und Aminogruppen in den übrigen Komponenten 0,7: 1 bis 1,2 : 1 beträgt.

2. Ungesättigte Polyurethane nach Anspruch 1, dadurch gekennzeichnet, daß die Komponente b) mehrfach ungesättigt ist.

3. Ungesättigte Polyurethane nach Anspruch 1, dadurch gekennzeichnet, daß die Komponente b) ein oxethylierter C₈-C₂₀-Fettalkohol mit 1 bis 20 Ethylenoxid-Einheiten ist.

4. Ungesättigte Polyurethane nach Anspruch 1, dadurch gekennzeichnet, daß die Komponente b) ein Umsetzungsprodukt aus einer ungesättigten Fettsäure und einem Monoepoxid ist.

5. Ungesättigte Polyurethane nach Anspruch 1, dadurch gekennzeichnet, daß die Komponente c) eine Bishydroxyalkancarbonsäure ist.

6. Verwendung der ungesättigten Polyurethane nach Anspruch 1 als Dispergiermittel zur Herstellung von wäßrigen Dispersionen hydrophober Alkydharze.

7. Wäßrige Dispersionen hydrophober Alkydharze, enthaltend ein ungesättigtes Polyurethan nach Anspruch 1.
